(19) Europäisches Patentamt
European Patent Office
Office européen des brevets

(11) Veröffentlichungsnummer: **0 023 291**
**B2**

(12) # NEUE EUROPÄISCHE PATENTSCHRIFT

(45) Veröffentlichungstag der neuen Patentschrift: **30.04.86**

(51) Int. Cl.⁴: **C 08 L 69/00,** C 08 K 5/52 // (C08L69/00, 55:02)

(21) Anmeldenummer: **80103872.0**

(22) Anmeldetag: **08.07.80**

(54) **Stabilisierte thermoplastische Formmassen auf Basis von Polycarbonaten, ABS-Polymeren und Phosphiten.**

(30) Priorität: **19.07.79 DE 2929229**

(43) Veröffentlichungstag der Anmeldung: **04.02.81 Patentblatt 81/5**

(45) Bekanntmachung des Hinweises auf die Patenterteilung: **03.08.83 Patentblatt 83/31**

(45) Bekanntmachung des Hinweises auf die Entscheidung über den Einspruch: **30.04.86 Patentblatt 86/18**

(84) Benannte Vertragsstaaten: **DE FR GB IT NL**

(56) Entgegenhaltungen:
**DE - A - 2 259 565**
**DE - B - 1 170 141**
**DE - B - 1 769 823**
**US - A - 3 305 520**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Idel, Karsten, Dr., Scheiblerstrasse 81, D-4150 Krefeld (DE)**
Erfinder: **Buysch, Hans-Josef, Dr., Brandenburgerstrasse 28, D-4150 Krefeld (DE)**
Erfinder: **Margotte, Dieter, Dr., Wedelstrasse 48, D-4150 Krefeld (DE)**
Erfinder: **Peters, Horst, Dr., Winterberg 25, D-5090 Leverkusen 3 (DE)**

**EP 0 023 291 B2**

LIBER, STOCKHOLM 1986

**Beschreibung**

Mischungen aus ABS-Kunststoffen und aromatischen Polycarbonaten sind bekannt (DE-PS 1 170 141), ebenso entsprechende Dreikomponentenmischungen mit Styro/Acrylnitril-Copolymerisaten als drittem Bestandteil (DE-AS 1 810 993). Mischungen aromatischer Polycarbonate mit speziellen ABS-Kunststoffen werden in DE-PS 2 259 656, DE-OS 2 329 548 und DE-OS 2 329 546 beschrieben.

Bei der Verarbeitung solcher Mischungen können insbesondere bei der Herstellung gorßflächiger Teile bei Temperaturbelastungen bis zu 300°C Oberflächenstörungen in Form von Bläschen oder Streifen auftreten.

Gegenstand der Erfindung sind Mischungen aus

1. 10-90 Gew.-Teilen eines Polycarbonats auf Basis von aromatischen Dihydroxyverbindungen und
2. 90-10 Gew.-Teilen einer Mischung aus

2.1 25-100 Gew.-Teilen eines Pfropfmischpolymerisats aus einem auf einen Kautschuk polymerisierten Monomerengemisch aus Styrol, Methylmethacrylat oder Acrylnitril

2.2 0-20 Gew.-Teilen eines Butadienpolymerisats mit Butadiengehalten von mindestens 5 Gew.-% und

2.3 0-75 Gew.-Teilen eines Copolymerisats aus Styrol, α-Methylstyrol Methylmethacrylat, Acrylnitril oder Methacrylnitril,

gekennzeichnet durch einen Gehalt von 0,01 bis 3,0, bevorzugt 0,05 bis 2 Gew.-%, bezogen auf die stabilisierte Gesamtmischung, eines Phosphorigsäureesters der Formel (I)

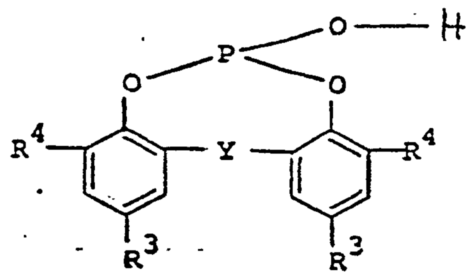

worin

$R^3$ und $R^4$, gleich oder verschieden, $C_1$-$C_9$-aliphatische, $C_5$-$C_6$-cycloaliphatische, $C_7$-$C_9$-Aralkyloder $C_6$-$C_{10}$-Aryl-Reste, und

Y —S— oder HC—$R^5$, mit $R^5$ = H, $C_1$-$C_6$-Alkyl, Cyclohexenyl- oder Cyclohexyl ist.

Die erfinungsgemäße Thermostabilisierung verbessert nicht nur das thermische Verhalten, sondern bewirkt bessere Oberfläche, höhere Stabilität der Schmelze u. bessere mechanische Eigenschaften der stabilisierten Produkte.

In der DE-AS 1 769 823 bzw. US-PS 3 305 520 sind Mischungen aus Polycarbonat und ABS, also zweier Thermoplasten, nicht angesprochen. Demzufolge sind die dort für gut befundenen Stabilisatoren auch für die erfingunsgemäße Anwendung ungeeignet, wie ein Vergleich besüglich Kerbschlagzähigkeit und optischem Einfluß zeigt. Weder das in US-PS 3 305 520 (Spalte 3/4) als günstig ausgewiesene Tri-(o-cyclohexyl-phenyl)-phosphit noch das 5,5-Dimethyl-1,3,2-dioxaphosphorinan liefern gleich gute Ergebnisse. Der Gegenstand der vorliegenden Erfindung wird somit durch diese beiden Lit.-Stellen nicht nahegelegt.

Besonders bevorzugt sind Verbindungen der Formel(I), in denen

$R^3$ einen $C_{1-9}$ Alkylrest, einen $C_{5-6}$ Cycloalkylrest, einen $C_{7-9}$ Aralkylrest oder einen $C_{6-10}$ Arylrest bedeutet,

$R^4$ einen Benzyl-, α-Methylbenzyl-, α,α-Dimethylbenzyl-, Methyl-, Ethyl-, Isopropyl-, tert.-Butyl-, tert.- Amyl-, Isononyl-, Cyclopentyl- oder Cyclohexylrest darstellt und

Y für —S—, $CH_2$, $CH_3$—CH, $CH_3CH_2$CH, $CH_3(CH_2)_2$—CH, $(CH_3)_2$CH—CH,

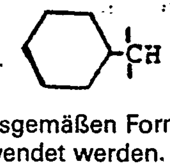 und 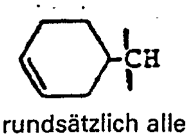

steht.

Für die erfindungsgemäßen Formmassen können grundsätzlich alle thermoplastischen aromatischen Polycarbonate verwendet werden.

Unter aromatischen Polycarbonaten im Sinne dieser Erfindung werden Homopolycarbonate und

Copolycarbonate verstanden, denen z.B. ein oder mehrere der folgenden Diphenole zugrundeliegen:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole,

sowie deren kernalkylierte und kernhalogenierte Verbindungen. Diese und weitere geeignete Diphenole sind z.B. in den US-Patentschriften 3 028 365, 2 999 835, 3 148 172, 3 275 601, 2 991 273, 3 271 367, 3 062 781 und 2 999 846, in den deutschen Offenlegungsschriften 1 570 703, 2 063 050, 2 063 052, 2 211 956, 2 211 957, der franz. Patentschrift 1 561 518 und der Monographie « H. Schnell, Chemistry and Physics of Polycarbonates, Interscience Publishers, New York, 1964 », beschrieben.

4,4'-Dihydroxydiphenyl
2,2-Bis-(4-Hydroxyphenyl)-propan
2,4-Bis-(4-hydroxyphenyl)-2-methylbutan
1,1-Bis-(4-hydroxyphenyl)-cyclohexan
α,α'-Bis(4-hydrozyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis(3,5-dimethyl-4-hydroxyphenyl)-p-diisopropyl-benzol
2,2-Bis-(3,5-dichlor-4-hydroxyphenyl)-propan
2,2-Bis-(3,3-dibrom-4-hydroxyphenyl)-propan

Besonders bevorzugte Diphenole sind z.B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekannten Verfahren hergestellt werden, z.B. einer Schmelzumesterung aus Bisphenol und Diphenylcarbonat und in Lösung aus Bisphenolen und Phosgen. Die Lösung kann homogen sein (« Pyridinverfahren »), oder heterogen (« Zweiphasengrenzflächenverfahren »). Erfindungsgemäß sind Polycarbonate, die in Lösung, insbesondere nach dem Zweiphasengrenzflächenverfahren hergestellt worden sind, besonders geeignet.

Die aromatischen Polycarbonate können durch den Einbau geringer Mengen, vorzugsweise von Mengen zwischen 0,05 und 2,0 Mol.% (bezogen auf eingesetzte Diphenole), an drei- oder mehr als dreifunktionellen Verbindungen, z.B. solchen mit drei oder mehr als drei phenolischen Hydroxygruppen verzweigt sein.

Polycarbonate dieser Art sind z.B. den DE-OS 1 570 533, 1 595 762, 2 116 974, 2 113 347, 2 500 092 der GB-PS 1 079 821, der US-PS 3 544 514 beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenyl-methan, 2,2-Bis-[4,4-bis-(4-hydroxypenyl)-cyclohecyl]-propan, 2,4-Bis-(4-hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und

1,4-Bis-(4,4''-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol.

Die aromatischen Polycarbonate sollen in der Regel mittlere Gewichtsmittel-Molekulargewichte $M_w$ von 10.000 bis über 200.000, vorzugsweise von 20.000 bis 80.000 haben, (ermittelt durch Messungen der rel. Viskosität in $CH_2CL_2$ bei 25°C bei einer Konzentration von 0,5 Gew.-%).

Im Falle der Polycarbonatmischungen können den hochmolekularen Polycarbonaten mit $M_w$ von 10.000 bis 200.000 auch kleine Anteile niedermolekularer Polycarbonate, z.B. mit einem mittleren Polymerisationsgrad von 2-20, zugemischt sein.

Ein weiterer Bestandteil der Formmassen ist ein Pfropfpolymerisat, (2.1) in welchem auf einen Kautschuk eine Monomerenmischung von vorzugsweise 95-50 Gew.-% Styrol, Methylmethacrylat oder Mischungen daraus und 5-50 Gew.-% Acrylnitril, Methylmethacrylat oder Mischungen daraus pfropfpolymerisiert ist. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure (z.B. Methylacrylat, Ethylacrylat, Methylmethacrylat und Ethylmethacrylat), prinzipiell sind alle elastifizierenden Komponenten geeignet, sofern sie ein kautschukelastisches Verhalten zeigen.

Neben dem Pfropfpolymerisat kann die Formmasse noch ein Butadienpolymerisat (2.2) enhalten.

Die Butadienpolymerisate, die in den Formmassen enthalten sind, sind bevorzugt Copolymerisate von 5-95 Gew.-% Butadien und 70-5 Gew.-% Styrol, Acrylnitril, Acrylsäure, Methacrylsäure, $C_1$-$C_6$-Alkylester der Acryl- oder Methacrylsäure (besonders bevorzugt Methylmethacrylat), Divinylbenzol und Mischungen dieser Comonomeren. Insbesondere sind geeignet Copolymerisate aus 70-90 Gew.-% Butadien und 30-10 Gew.-% Styrol, Copolymerisate aus 60-95 Gew.-% Butadien und 40-5 Gew.-% Methylmethacrylat, Copolymerisate von 30-95 Gew.-% Butadien und 70-5 Gew.-% Acrylsäurebutylester, sowie Copolymerisate aus 60-80 Gew.-% Butadien und 40-20 Gew.-% Acrylnitril. In diesen letzten Copolymerisaten können auch noch zusätzlich kleinere Mengen (bis etwa insgesamt 10 %) Methacrylsäure und/oder Divinylbenzol einpolymerisiert sein. Beispiele für Ter- bzw. Quarterpolymerisate der letztgenannten Art sind Copolymerisate aus 63 % Butadien, 34 % Acrylnitril und 3 % Methacrylsäure, oder Copolymerisate aus 60 Gew.-% Butadien, 36 Gew.-% Acrylnitril, 3 % Methacrylsäure und 1 % Divinylbenzol.

Neben dem Pfropfcopolymerisat kann die Formmasse noch ein Copolymerisat (2.3) aus den Pfropfmonomeren oder ähnlichen Monomeren enthalten. Es handelt sich vorzugsweise um Copolymerisate aus 95-50 Gew.-% Styrol, α-Methylstyrol, Methylmethacrylat oder Mischungen daraus mit 5-50 Gew.-% Acrylnitril, Methacrylnitril, Methylmethacrylat oder Mischungen daraus. Solche Copolymeren entstehen häufig bei der Pfropfpolymerisation als Nebenprodukte, besonders dann, wenn große Mengen Monomerer auf kleine Mengen Kautschuk gepfropft werden. Es ist dabei möglich, neben oder anstelle der so entstandenen Copolymeren noch getrennt hergestellte Copolymere dieser Art zuzumischen.

Die erfinungsgemäßen Formmassen können durch Vermischen der Einzelkomponenten erhalten werden. In einer bevorzugten Herstellungsmethode werden zunächst die Latices des Pfropfpolymerisats (2.1) und gegebenenfalls die des Butadienpolymerisats (2.2) und des Copolymerisats (2.3) gemischt und die Feststoffe gemeinsam ausgefällt und getrocknet. Die so erhaltene Pulvermischung wird dann mit dem Polycarbonat abgemischt. Die Einzelkomponenten der erfindungsgemäßen Formmassen können aber auch getrennt hergestellt und dann auf bekannten Mischvorrichtungen gemischt werden. Geeignet sind hierfür z.B. Mischwalzerke, Schneckenextruder oder Innenmischer.

Die Einarbeitung der Stabilisatoren kann nach bekannten Techniken in jeglicher Weise erfolgen. So können die Stabilisatoren z.B. über Kneter oder Schneckenmaschinen sowohl vorher in die Einzelkomponenten der Mischung als auch direkt bei det thermoplastischen Verarbeitung der Einzelkomponenten zur Gesamtmischung oder auch nachträglich in die Gesamtmischung selbst eingearbeitet werden.

Entweder enthalten die Einzelkomponenten der erfinungsgemäßen Formmassen Zusätze wie Stabilisatoren, Flammschutsmittel, Pigmente, Fließmittel, Gleitmittel, Entformungsmittel, Antistatika oder bei der Vermischung der Einzelkomponenten können die obengenannten Zusätze zugefügt werden.

Die Formmassen der vorliegenden Erfindung können zur Herstellung von Formkörpern jeder Art verwendet werden. Insbesondere Können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teilen für den Kfz-Sektor. Sie werden außerdem auf dem Gebiet der Elektrotechnik eingesetzt, weil sie sehr gute elektrische Eigenschaften haben. Eine weitere Form der Verarbeitung ist die Herstellung von Formkörpern durch Tiefziehen aus vorher hergestellten Platten oder Folien.

Stabilisator (a)

Phosphorigsäureester des Bis-(2-hydroxy-3-cyclohexyl-5-methyl-phenyl)-methans

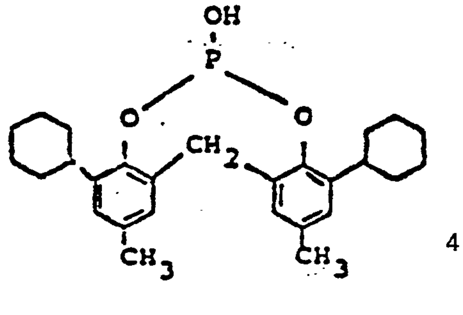

Ein Gemisch aus 392 g (1 Mol) Bis-(2-hydroxy-3-cyclohexyl-5-methyl-phenyl)-methan, 310 g (1 Mol) Triphenylphosphit und 18 g (1 Mol) Wasser wird unter Normaldruck und $N_2$ bis 180° erhitzt. Man läßt abkühlen auf 100°C und erhitzt dann bei 25 Torr in 2,5 h von 100 auf 200°C. Dabei gehen 270 g Phenol über. Als Rückstand verbleibt ein fast farbloses, langsam kristallisierendes Produkt (450 g). Schmelzpunkt 180-1°C (aus Xylol) MG 403 (ber. 438).

$C_{27}H_{35}PO_3$

| | | |
|---|---|---|
| C | ber. 76,23 | gef. 76,61 |
| H | 8,50 | 8,43 |
| P | 7,06 | 7,36 |

Stabilisator (b)

Phosphorigsäureester des Bis-(2-hydroxy-3-benzyl-5-methyl-phenyl)-sulfids

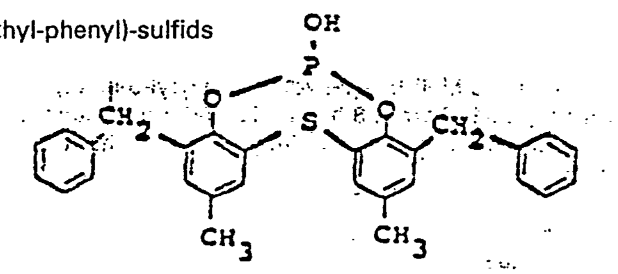

Ein Gemisch von 213 g Bis-(2-hydroxy-3-benzyl)-5-methyl-phenyl)-sulfid (0,5 Mol), 155 g (0,5 Mol) Triphenylphosphit und 9 g (0,5 Mol) $H_2O$ wird zunächst unter $N_2$ und Normaldruck auf 180°C gebracht und nach Abkühlen auf 100°C bei 25 Torr in 2 h von 100°C auf 200°C. 135 g Phenol destillieren über. Das Reaktionsprodukt (250 g) stellt ein gelbliches Harz der Formel (b) dar.

Stabilisator (c)

Phosphorigsäureester des Bis-(2-hydroxy-3-benzyl-5-methyl-phenyl)methans

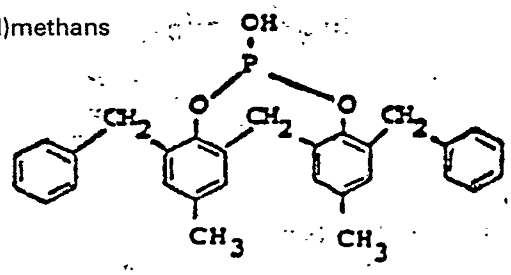

Ein Gemisch aus 77,5 g (0,25 Mol) Triphenylphosphit, 4,5 g (0,25 Mol) $H_2O$ und 102 g (0,25 Mol) Bis-(2-hydroxy-3-benzyl-5-methyl-phenyl)-methan wird wie in Beispiel 7 umgesetzt. Man erhält 69 g Phenol als Destillat und 118 g der Verbindung (c) als gelbliches Harz.

Stabilisator (d)

Phosphorigsäureester des Bis-(2-hydroxy-3-cyclohexyl-5-methyl-phenyl)-sulfids

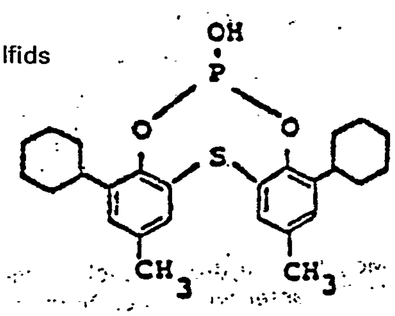

Ein Gemisch von 41 g (0,1 Mol) Bis-(2-hydroxy-3-cyclohexyl-5-methyl-phenyl)-sulfid, 31 g (0,1 Mol) Triphenylphosphit und 1,8 g (= 0,1 Mol) $H_2O$ wird unter $N_2$ und Rühren auf 180°C gebracht, auf 100°C abgekühlt und dann bei 12-13 Torr in 5 h von 100-250°C erhitzt, wobei 27 g Phenol übergehen. Als Reaktionsprodukt bleiben

45 g eines festen hellgelben Harzes. Aus Ligroin erhält man Kristalle mit einem Schmelzpunkt von 122°C.

| $C_{26}H_{33}PO_3S$ (456,59) % | | |
|---|---|---|
| C | ber. 68,35 | gef. 68,13 |
| H | 7,29 | 7,52 |
| P | 6,78 | 6,43 |
| S | 7,02 | 7,28 |

Die Formmassen der nachfolgenden Beispiele wurden auf einem Innenkneter bei 230°C bzw. einem Doppelwellenextruder bei 260°C durch Mischen des ABS-Polymerisats mit der Polycarbonatkomponente und dem jeweiligen Stabilisator hergestellt.

Die Eigenschaften der Formmassen wurden nach folgenden Methoden bestimmt:

1. Kerbschlagzähigkeit nach DIN 53 453 bei Raumtemperatur. Die Prüfkörper wurden bei den angegebenen Massetemperaturen auf Schneckenspritzgießmaschinen hergestellt.
2. Die optische Beurteilung erfolgte an spritzgegossenen Musterplatten (60 x 40 x 2 mm). Zugrundegelegt wurde eine Bewertungsskala von 1-7. Hierin bedeutet 1 einwandfreie Oberfläche, 3-4 geringfügige, vertretbare Oberflächenstörungen, 7 starke Schlieren.
3. Der Intrinsic Melt-Index (IMI) und die theoretische Halbwertszeit $t_h$ wurden bei 5-kg-Belastung nach DIN 53 735 bei 260°C gemessen.

Bei diesen Beispielen wurde ein Polycarbonat auf Basis Bisphenol A mit einer relativen Lösungsviskosität $\eta$ rel = 1,290-1,300 (0,5 g Polycarbonat in 100 ml Methylenchlorid bei 25°C) und folgende ABS-Polymerisate verwendet:

## ABS-Polymerisat A

a) 60 Gew.-Tln eines Pfropfpolymerisats, hergestellt durch Pfropfung von 35 Gew.- Tln Styrol und 15 Gew.-Tln Acrylnitril auf 50 Gew.-Tle eines grobteiligen Polybutadiens (gem. den Angaben der DE-AS 1 247 665 und 1 269 360 über eine Emulsionspolymerisation), wobei der mittlere Teilchendurchmesser der in Latexform vorliegenden Polybutadienpfropfgrundlage zwischen 0,3 und 0,4 μm liegt, und
b) 40 Gew.-Tln eines Styrol-Acrylnitril-Copolymerisats mit einem Styrol-Acrylnitril-Verhältnis von 70:30 und einer Grenzviskosität von [$\eta$] = 79,1 (Messung in Dimethylformamid bei 20°C).

## ABS-Polymerisat B

a) 70 Gew.-Tln eines Pfropfpolymerisats, hergestellt durch Pfropfung von 35 Gew.-Tln Styrol und 15 Gew.-Tln Acrylnitril auf 50 Gew.-Tle eines feinteiligen Polybutadiens mit einem mittleren Teilchendurchmesser von 0,05 bis 0,15 μm und
b) 30 Gew.-Tln eines Copolymerisats aus Styrol-Acrylnitril im Verhältnis 70:30 mit einer Grenzviskosität von [$\eta$] = 80,9.

## Beispiele 1-4

| | | Anteil i. d. Gesamtmischung in Gew.-Tln | | | |
|---|---|---|---|---|---|
| Polycarbonat | | 45 | 45 | 45 | 45 |
| ABS-Polymerisat A | | 55 | 55 | 55 | 55 |
| Stabilisator (a) | | - | 0,25 | - | 0,1 |
| Stabilisator (d) | | - | - | 0,25 | 0,1 |
| Kerbschlagzähigkeit kJ/m² | | 13,7 | 33,1 | 30,5 | 31,7 |
| optische Beurteilung | 250°C | 1 | 1 | 1 | 1 |
| nach Spritzgießen | 260°C | 1 | 1 | 1 | 1 |
| bei Temperatur | 270°C | 3 | 1 | 1 | 1 |
| bei Temperatur | 280°C | 4 | 2 | 2 | 2 |

## Beispiele 5-8

| | | | | | |
|---|---|---|---|---|---|
| Polycarbonat | | 60 | 60 | 60 | 60 |
| ABS-Polymerisat A | | 40 | 40 | 40 | - |
| ABS-Polymerisat B | | - | - | - | 40 |
| Stabilisator (a) | | - | 0,1 | 0,25 | 0,25 |
| optische Beurteilung | 270°C | 2 | 1 | 1 | 1 |

| | | | | | |
|---|---|---|---|---|---|
| nach Spritzgießen | 280°C | 4 | 1 | 1 | 1 |
| bei Temperatur | 290°C | 5 | 2 | 1 | 2 |
| | 300°C | | 4 | 3 | 4 |

Beispiele 9-12

| | | | | | |
|---|---|---|---|---|---|
| Polycarbonat | | 70 | 70 | 70 | 70 |
| ABS-Polymerisat A | | 30 | 30 | 30 | 30 |
| Stabilisator (a) | | - | 0,1 | 0,25 | - |
| Stabilisator (d) | | - | - | - | 0,25 |
| optische Beurteilung | 270°C | 1 | 1 | 1 | 1 |
| nach Spritzgießen | 280°C | 1 | 1 | 1 | 1 |
| bei Temperatur | 290°C | 4 | 2 | 1 | 1 |
| | 300°C | 6 | 4 | 3 | 3 |
| Kerbschlagzähigkeit | 280°C | 61 | 52 | 44 | 48 |
| kJ/m² | 300°C | 12 | 24 | 25 | 24 |
| Schmelzeverhalten | | | | | |
| IMI g/10 min | | 7,3 | 7,8 | 8,0 | 7,9 |
| $t_n$ min | | 60 | 135 | 642 | 578 |

**Ansprüche 1-3 eingegangen am 27.8.84**

**Patentansprüche**

1. Stabilisierte thermoplastische Mischungen aus

1. 10-90 Gew.-Teilen eines Polycarbonats auf Basis von aromatischen Dihydroxyverbindungen und
2. 90-10 Gew.-Teilen einer Mischung aus
2.1 25-100 Gew.-Teilen eines Pfropfmischpolymerisats aus einem auf einen Kautschuk polymerisierten Monomerengemisch aus Styrol, Methylmethacrylat oder Acrylnitril
2.2 0-20 Gew.-Teilen eines Butadienpolymerisats mit Butadiengehalten von mindestens 5 Gew.-% und
2.3 0-75 Gew.-Teilen eines Copolymerisats aus Styrol, α-Methylstyrol Methylmethacrylat, Acrylnitril oder Methacrylnitril,

gekennzeichnet durch einen Gehalt von 0,01 bis 3,0 Gew.-%, bezogen auf die stabilisierte Gesamtmischung, eines Phosphorigsäureesters der Formel (I)

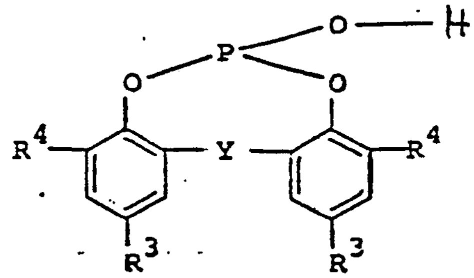

worin
$R^3$ und $R^4$, gleich oder verschieden, $C_1$-$C_9$-aliphatische, $C_5$-$C_6$-cycloaliphatische, $C_7$-$C_9$-Aralkyl- oder $C_6$-$C_{10}$-Aryl-Reste, und

Y —S— oder HC—$R^5$, mit $R^5$ = H, $C_1$-$C_6$-Alkyl, Cyclohexenyl- oder Cyclohexyl ist.

2. Mischungen gemäß Anspruch 1, dadurch gekennzeichnet, daß der Gehalt an Phosphorigsäureester 0,05 bis 2 Gew.-% beträgt.
3. Mischungen gemäß Ansprüche 1 und 2, dadurch gekennzeichnet, daß sie als Phosphorigsäureester solche der Formel (I) enthalten, in der
$R^3$ einen $C_1$ bis $C_9$-Alkylrest, einen $C_5$ bis $C_6$-Cycloalkylrest, einen $C_7$ bis $C_9$-Aralkylrest oder einen $C_6$ bis $C_{10}$-Arylrest bedeutet,

$R^4$ einen Benzyl-, α-Methylbenzyl-, α,α-Dimethylbenzyl-, Methyl-, Ethyl-, Isopropyl-, tert.-Butyl-tert.- Amyl-, Isononyl-, Cyclopentyl- oder Cyclohexylrest darstellt, und

Y für —S—, $CH_2$, $CH_3$—CH, $CH_3CH_2CH$, $CH_3(CH_2)_2$—CH, $(CH_3)_2CH$—CH,

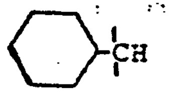 und 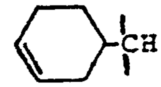

steht.

## Claims

1. Stabilized thermoplastic mixtures of

1. 10-90 parts by weight of a polycarbonate based on aromatic dihydroxy compounds and
2. 90-10 parts by weight of mixture of

2.1 25-100 parts by weight of a graft copolymer of a monomer mixture of styrene, methylmetnacrylate or acrylonitrile, which mixture is polymerised on a rubber,

2.2 0-20 parts by weight of a butadiene polymer having butadiene contents of a least 5 % by weight and

2.3 0-75 parts by weihgt of a copolymer of styrene, α-methylstyrene, methylmethacrylate, acrylonitrile or methacrylonitrile,

characterised by containing from 0.01 to 3.0 % by weight, based on the stabilized total mixture, of a phosphorous acid ester corresponding to formula (I)

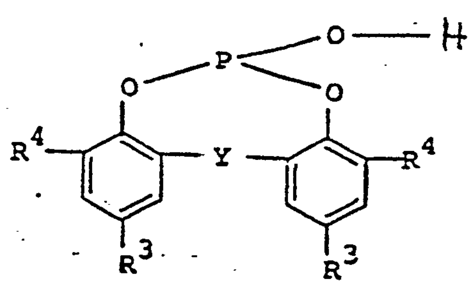

wherein

$R^3$ and $R^4$, which are identical or different, represent $C_1$-$C_9$-aliphatic, $C_5$-$C_6$-cycloaliphatic, $C_7$-$C_9$-aralkyl or $C_6$-$C_{10}$-aryl groups, and

Y represents —S— or HC—$R^5$ wherein $R^5$ = H, $C^1$-$C^6$-alkyl, cyclohexenyl or cyclohecyl,

2. Mixtures according to claim 1, characterised in that the phosphorous acid ester content is from 0.05 to 2 % by weight.

3. Mixtures according to claims 1 and 2, characterised in that they contain, as phosphorous acid esters, those corresponding to the formula (I) in which

$R^3$ represents a $C_1$ to $C_9$-alkyl group, a $C_5$ to $C_6$-cycloalkyl group, a $C_7$ to $C_9$-aralkyl group or a $C_6$ to $C_{10}$-aryl group,

$R^4$ represents a benzyl, α-methylbenzyl, α,α-dimethylbenzyl, methyl, ethyl, isipropyl, tert.-butyl, tert.-amyl, isononyl, cyclopentyl or cyclohexyl group, and

Y represents —S—, $CH_2$, $CH_3$—CH, $CH_3CH_2CH$, $CH_3(CH_2)_2$—CH, $(CH_3)_2CH$—CH,

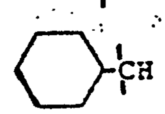 and 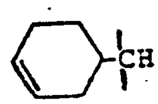

**Revendications**

1. Mélanges thermoplastiques stabilisés, formés

1. 10-90 parties en poids d'un polycarbonate à base de composés dihydroxyliques aromatiques et
2. 90-10 parties en poids d'un mélange de

2.1 25-100 parties en poids d'un copolymérisat greffé d'un mélange de monomères, polymérisé sur un caoutchouc, de styrène, de méthacrylate de méthyle ou d'acrylonitrile

2.2 0-20 parties en poids d'un plymérisat butadiénique à teneur en butadiène d'au moins 5 % en poids et

2.3 0-75 parties en poids d'un copolymérisat de styrène, d'α-méthylstyrène, de méthacrylate de méthyle, d'acrylonitrile ou de méthacrylonitrile,

caractérisés par une teneur de 0,01 à 3,0 % en poids, par rapport au mélange total stabilisé, d'un ester d'acide phosphoreux de formule (I)

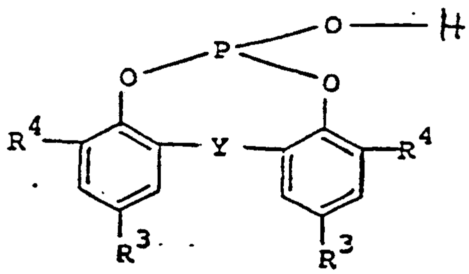

dans laquelle

$R^3$ et $R^4$, égaux ou différents, sont des restes aliphatiques en $C_1$ à $C_9$, cycloaliphatiques en $C_5$ ou $C_6$, aralkyle en $C_7$ à $C_9$ ou aryle en $C_6$ à $C_{10}$, et

Y représente —S— ou HC—$R^5$, où $R^5$ = H, alkyle en $C_1$ à $C_6$, cyclohexényle ou cyclohexyle.

2 Mélanges suivant la revendication 1, caractérisés en ce que la teneur en ester d'acide phosphoreux s'élève à 0,05-2 % en poids.

3 Mélanges suivant les revendications 1 et 2, caractérisés en ce qu'ils contiennent comme esters d'acide phosphoreux des esters de formule (I) dans laquelle

$R^3$ est un reste alkyle en $C_1$ à $C_9$, un reste cycloalkyle en $C_5$ ou $C_6$, un reste aralkyle en $C_7$ à $C_9$ ou un reste aryle en $C_6$ à $C_{10}$,

$R^4$ représente un reste benzyle, α-méthylbenzyle, α,α-diméthylbenzyle, méthyle, éthyle, isopropyle, tertio-butyle, tertio-amyle, isononyle, cyclopentyle ou cyclohexyle, et

Y repésente —S—, $CH_2$, $CH_3$—CH, $CH_3CH_2$CH, $CH_3(CH_2)_2$—CH, $(CH_3)_2$CH—CH,

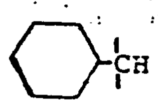 et